# EUROPÄISCHE PATENTANMELDUNG

(11) **EP 0 980 749 A2**
(43) Veröffentlichungstag der Anmeldung: **23.02.2000**
(21) Anmeldenummer: 99115996.3
(22) Anmeldetag: 14.08.1999
(51) Int. Cl.: B29D 30/06, B29C 35/08

(54) **Verfahren zum Herstellen eines Fahrzeugluftreifens**

(30) Priorität: 20.08.1998 DE 19837817
(71) Anmelder: Continental Aktiengesellschaft, 30165 Hannover (DE)
(72) Erfinder: Sergel, Horst, 30657 Hannover (DE); Glinz, Michael, 31535 Neustadt (DE)

(57) **Zusammenfassung**

Die Erfindung bezieht sich auf ein Verfahren zur Herstellung eines Fahrzeugluftreifans, mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und gegebenenfalls zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei im Verfahrensachritt A ein Teilreifen aufgebaut wird, der radial außen eine Gürtelverstärkung aufweist, die eine Bandage umfassen kann und dieser Teilreifen anschließend im wesentlichen ausvulkanisiert wird, und im Verfahrensschritt B der Teilreifen durch Hinzufügen des gesamten oder der restlichen Teile des insbesondere unvulkanisierten Laufstreifens zu einem Komplettreifen aufgebaut wird, der dann ebenfalls einem Vulkanisationsprozeß unterzogen wird.

Um ein Verfahren zur Herstellung eines Fahrzeugluftreifens bereitzustellen, das zumindest aus zwei getrennten Verfahrensschritten A und B besteht, wobei dieses verfahrenstechnisch einfach und umweltfreundlich eine Anbindung des im Verfahrensschritt A hergestellten Teilreifens an die zur Komplettierung des Reifens im Verfahrensschritt B erforderlichen Teile zuläßt, wird vorgeschlagen, daß daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt gebracht wird, zumindest teilweise plasmabehandelt wird.

## Beschreibung

Die Erfindung betrifft ein Verfahren zur Herstellung eines Fahrzeugluftreifens, mit einer radial innenliegenden luftundurchlässigen Schicht, einer Karkasse, die um die gegebenenfalls angeordneten Wulstkerne geschlagen ist, einem radial außen befindlichen Laufstreifen, zumindest einer zwischen Karkasse und Laufstreifen angeordneten Gürtellage und gegebenenfalls zumindest einer über der Gürtellage befindlichen ein- oder mehrteiligen Bandage, Seitenwänden sowie gegebenenfalls weiteren üblichen Bestandteilen, durch zumindest zwei voneinander getrennte Verfahrensschritte A und B, wobei im Verfahrensachritt A ein Teilreifen aufgebaut wird, der radial außen eine Gürtelverstärkung aufweist, die eine Bandage umfassen kann und dieser Teilreifen anschließend im wesentlichen ausvulkanisiert wird, und im Verfahrenschritt B der Teilreifen durch Hinzufügen des gesamten oder der restlichen Teile des insbesondere unvulkanisierten Laufstreifens zu einem Komplettreifen aufgebaut wird, der dann ebenfalls einem Vulkanisationsprozeß unterzogen wird.

In der DE 195 07 486 A1 ist sowohl ein herkömmliches Verfahren zur Herstellung eines Neureifens (Figuren 1a bis 1f) als auch die Herstellung eines Neureifens durch zwei voneinander getrennte Verfahrensteile beschreiben. Ein solches Verfahren ermöglicht es, verschiedene Reifeneigenschaften während des Herstellungsprozesses zu optimieren. Darüber hinaus bietet dieses Verfahren den Vorteil einer weitgehenden Flexibilisierung der Produkt- und Produktionsplanung. Der erste Verfahrensteil beinhaltet einen Aufbau eines Teilreifens, der als radial äußerste Schicht wenigstens eine Karkasslage und höchstens einen Teil des Laufstreifens aufweist und die im wesentlichen Ausvulkanisation dieses Teilreifens in einer Vulkanisationsform. Nach einer eventuellen Lagerung des im wesentlichen fertig vulkanisierten Teilreifens kann dieser zu einem Komplettreifen konfektioniert werden, z.B. durch Aufbringung beispielsweise eines unvulkanisierten Laufstreifens. Um einen guten Verbund zwischen dem ausvulkanisierten Teilreifen und der im zweiten Verfahrensteil aufgebrachten Schicht bzw. Schichten zu erzielen, ist es erforderlich, den fertig vulkanisierten Teilreifen, z.B. mechanisch aufzurauhen und/oder Haftvermittler auf den Teilreifen bzw. auf die aufzubringenden Schichten aufzutragen. Der Aufrauhvorgang hat den Nachteil, daß gesundheitsgefährdende feine Stäube freigesetzt werden. Die Aufbringung eines Haftvermittlers, der i.a. organisches Lösungsmittel enthält, stellt ebenfalls eine Gesundheitsgefährdung für die Arbeitskraft dar, bzw. muß durch aufwendige Absaugvorrichtungen gewährleistet werden, daß der MAK-Wert nicht überschritten wird. Die DE 195 07 486 A1 schlägt zudem außerdem vor, die Teile des Reifens, die aufgerauht bzw. mit einer Haftvermittlerschicht versehen werden, mit einer dickeren Gummischicht zu versehen, um Beschädigungen, z.B. der innenliegenden Festigkeitsträger zu vermeiden. Das hat den Nachteil, daß zusätzliche Parameter bei der Beschichtung (z.B. während des Kalandrierprozesses) der Festigkeitsträger beachtet werden müssen. Gleichzeitig muß eine größere Menge an Kautschukmischung bereitgestellt werden, was Kostennachteile mit sich bringt. Außerdem wird das Gewicht des Reifens erhöht, was wiederum den Kraftstoffverbrauch des Kraftfahrzeuges anhebt.

Die DE 44 44 994 A1 offenbart die Möglichkeit, die Oberfläche von z. B. Polyethylen, Glas oder Aluminium mittels einer Plasma- oder Koronaentladung zu behandeln und diese behandelteten Materialien nach Aufbringung einer weiteren Substanz mit einem bromierten Copolymer aus Isobutylen und p-Methylstyren zu verbinden.

Der vorliegenden Anmeldung liegt die Aufgabe zugrunde, ein Verfahren zur Herstellung eines Fahrzeugluftreifens bereitzustellen, das zumindest aus zwei getrennten Verfahrensschritten A und B besteht, wobei dieses verfahrenstechnisch einfach und umweltfreundlich eine Anbindung des im Verfahrensschritt A hergestellten Teilreifens an die zur Komplettierung des Reifens im Verfahrensschritt B erforderlichen Teile zuläßt.

Gelöst wird diese Aufgabe erfindungsgemäß dadurch, daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt gebracht wird, zumindest teilweise plasmabehandelt wird.

Weiterhin wird diese Aufgabe erfindungsgemäß dadurch gelöst, daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt gebracht wird, zumindest teilweise flammenbehandelt wird.

Durch diese Maßnahmen kann auf einen Aufrauhprozeß bzw. auf die Aufbringung von Haftvermittlern, die meist organische Lösungsmittel enthalten, was sich wiederum nachteilig auf eine umweltverträgliche Herstellung eines Fahrzeugluftreifens auswirkt, verzichtet werden. Außerdem ist eine Erhöhung der Stärke der Kautschukmischungsschicht, in die z.B. Festigkeitsträger eingebettet werden, nicht erforderlich, da eine Plasma- und/oder Flammenbehandlung nur an der Oberfläche der Kautschukmischungsschicht stattfindet. Diese Behandlung der Oberfläche des im wesentlichen ausvulkanisierten Teilreifens und/oder der Oberfläche der im Verfahrensschritt B aufzubringenden Schichten verbessert die Konfektionsklebrigkeit, wodurch auch die Haftung im fertigen Komplettreifen positiv beeinflußt wird.

Unter dem Terminus Plasmabehandlung soll die Einwirkung von durch Gasentladung entstandenen Teilchen (z.B. Radikale, Ionen, Elektronen, Moleküle) auf eine im wesentlichen ausvulkanisierte Oberfläche des im Verfahrensteil A hergestellten Teilreifens und/oder die Oberfläche der im Verfahrensachritt B aufgebrachten unvulkanisierten Schichten verstanden werden, wobei die mittlere Temperatur der behandelnden Oberfläche nicht über 100 °C ansteigt. Bei einer Plasmabehandlung wird im allgemeinen unterteilt in Niederdruckplasma und Normaldruckplasma. Bei dem Verfahren, das unter Verwendung eines Niederdruckplasmas abläuft, wird in einer Prozeßkammer bei einem verrringerten Druck (z. B. 0,5 - 2 mbar) ein Gas oder ein Gasgemisch eingeleitet. Durch Anlegen einer hochfrequenten Wechselspannung wird eine Gasentladung (Plasma) gezündet, wobei das Gas in den ionisierten Zustand überführt wird. Als Gas kann z.B. Luft, Edelgase, Sauerstoff oder Stickstoff verwendet werden. Die entstandenen Fragmente des Gases oder des Gasgemisches treffen erfindungsgemäß auf die Oberflächen des im wesentlichen ausvulkanisierten Teilreifens und/oder der im Verfahrensschritt B aufgebrachten unvulkanisierten Schichten und bewirken deren Modifizierung. Je nach Verwendung des eingesetzten Gases bzw. Gasgemisches können z.B. polare Gruppen auf die Oberfläche des ausvulkanisierten Teilreifens und/oder die im Verfahrensschritt B aufgebrachten unvulkanisierten Schichten aufgebracht werden. Das Niederdruckplasma besitzt den Vorteil, daß sich im allgemeinen die behandelnde Oberfläche nur auf ca. 30-60 °C erwärmt, wodurch eine unbeschadete Behandlung der Oberfläche auch mit Materialien erfolgen kann, deren Aufbringung bei Normaldruck nicht möglich wäre. Des weiteren ist das Niederdruckplasma-Verfahren sehr effektiv, da die Lebensdauer der aktiven Teilchen bei vermindertem Druck hoch ist. Aufgrund des abgeschlossenen Prozeßraumes können definierte Gase oder Gasgemische zur Anwendung kommen. Des weiteren wird eine inhomogene oder unzureichende Aktivierung vermieden.

Als weiteres Verfahren zur Behandlung der Oberfläche des ausvulkanisierten Teilreifens und/oder die im Verfahrensschritt B aufgebrachten z. B unvulkanisierten Schichten wird die Verwendung von Normaldruckplasmen angesehen. Im Unterschied zum Niederdruckplasma-Verfahren findet die Gasentladung nicht in einem abgeschlossenen Raum statt, so daß dieses unter atmosphärischen Bedingungen, wie Normaldruck und Luft, arbeitet. Als bevorzugtes Verfahrens findet dabei die Koronaentladung Anwendung.

Prinzipiell ist es auch möglich, die entsprechende(n) Oberfläche oder Oberflächen mit einem Hochtemperaturplasma zu behandeln. Allerdings ist dabei darauf zu achten, daß die Verweilzeit der Einwirkung des Plasmas so gewählt wird, daß die mittlere Oberflächentemperatur nicht über 100 °C ansteigt.

Als Gasmedium soll vorzugsweise für die Plasmabehandlung Luft Verwendung finden. Aufgrund der einfachen Handhabung der damit verbundenen Vorrichtung kann unkompliziert die Oberfläche der entsprechenden Bauteile behandelt werden. Vorstellbar wäre in diesem Zusammenhang, daß Sauerstoffbestandteile die Oberfläche der entsprechenden Elastomerschicht polarisieren, was eine Ursache zur Erhöhung der Konfektionsklebrigkeit sein könnte. Prinzipiell sind aber auch andere Gase denkbar, die in der Lage sind, die Oberfläche geeignet zu modifizieren. Da die meisten Elastomere unpolarer Natur sind, erscheint es vorteilhaft, diese während der Plasmabehandlung mit polaren Bestandteilen zu versehen (Sauerstoff, Halogene). Um den Vulkanisationsprozeß an der Oberfläche der entsprechenden Bauteile positiv zu beeinflussen, ist es denkbar, als Gas bzw. als Gasgemisch auch schwefelenthaltende Substanzen zu verwenden.

Besonders bevorzugt ist, wenn als Plasmabehandlungsverfahren die Koronabehandlung angewandt wird. Dieses Verfahren ist kostengünstig und mit apparativem geringen Aufwand zu bewerkstelligen. Für die Koronaentladung sind verschiedene Verfahrensweisen bekannt, wie z.B. die Hochfrequenzfunkenentladung und die Niederfrequenzentladung. Bei der Hochfrequenzentladung besteht die Möglichkeit, eine Einzelelektrode, an die Hochspannung anliegt (> 15 kV), Korona absprühen zu lassen. Die unmittelbar in der Nähe befindlichen Gegenstände (Teilreifen und/oder im Verfahrensschritt B aufzubringende Schichten) dienen als Auftrittsfläche dieser Gasentladung. Der Vorteil der Hochfrequenzfunkenentladung besteht darin, daß dieses Verfahren sehr effizient ist, da genau reguliert werden kann, wie groß die angelegte Spannung an der Elektrode ist und damit die Koronabehandlung der entsprechenden Bauteile des Reifens auch energetisch optimiert werden kann.

Im Gegensatz zur Hochfrequenzfunkentladung (Bereiche um 25 kHz) arbeitet die Niederfrequenzfunkenentladung bei 50-60 Hz. Durch eine quer zur Entladungsrichtung verlaufende Luftströmung wird das entladene Gas aus dem Elektrodenbereich herausgedrückt und somit kann dieses auf die zu behandelnde Oberfläche einwirken. Diese niederfrequente Entladung ist für das erfindungsgemäße Verfahren bevorzugt, da eine einfache Umsetzung aufgrund des geringen apparativen Aufwandes erfolgen kann. An dieser Stelle soll weiterhin auf Literaturstelle 3 verwiesen werden.

Als weiteres Verfahren zur Behandlung von der Oberfläche des ausvulkanisierten Teilreifens und/oder die im Verfahrensschritt B aufgebrachten insbesondere unvulkanisierten Schichten hat sich die Beflammung der Oberfläche bewährt. Zum Beispiel werden bei der Verwendung einer Gasflamme an der Oberfläche der entsprechenden Elastomerschicht aufgrund der Wärmeeinwirkung Molekülketten aufgebrochen und an diese Stellen werden in der Flamme enthaltene Sauerstoffbestandteile angebunden. Die Flammenbehandlung kann in Kombination (zeitlich nacheinander) mit der Plasmabehandlung erfolgen.

Bezüglich der Plasmabehandlung und der Flammenbehandlung wird an dieser Stelle auf folgende Literatur verwiesen:
1. Jörg Friedricht: Plasmabehandlung von Polymeren, Kleben und Dichten - Adhäsion, Jahrgang 41, 1-2/97, S. 28-33
2. Gerhard Liebel: Plasmabehandlung von Polyolefinen, GAK 8/1990, S. 421 ff.
3. Fritz Bloss: Zur Koronabehandlung von Formteilen, Sonderdruck aus Oberfläche + JOT 12/88 (Vorbehandeln)
4. Thomas H., Herrling J., Rakowski W., Höcker H.: Umweltfreundliche Veredlungsverfahren für Wolle durch Vorbehandlung mit elektrischen Gasentladungen (Plasmen), ITP 2/93, S. 42-49

Bei dem erfindungsgemäßen Verfahren wird der Teilreifen im Verfahrensschritt A soweit konfektioniert, daß die luftundurchlässige Innenschicht, eine oder mehrere Lage(n) der Karkasse gegebenenfalls die Wulstkerne bzw. weitere den Wulstbereich verstärkende Lagen, eine oder mehrere Gürtellage(n) und gegebenenfalls eine ein- oder mehrteilige Bandage den Teilreifen bilden. Anmeldungsgemäß sollen die Gürtellagen und gegebenenfalls die Bandage und/oder gegebenenfalls weitere verstärkende Schichten radial oberhalb der Karkasse unter dem Begriff Gürtelverstärkung gefaßt werden. Es ist natürlich auch möglich, daß sich zwischen den anderen einzelnen Bestandteilen des Teilreifens weitere Kautschukmischungsschichten befinden. Weiterhin ist es möglich, daß auf den Teilreifen als radial äußerste Lage eine Laufstreifenunterplatte und/oder eine Laufstreifenbasislage aufgebracht wird. Dieser Teilreifen A wird im wesentlichen ausvulkanisiert. Der Vulkanisationsprozeß wird vorzugsweise in einer Vulkanisationsform vorgenommen, die es ermöglicht, sowohl die Oberfläche als auch dem bzw. den Festigkeitsträger(n) eine vorbestimmte Querschnittskontur zu vermitteln. Dadurch wird ein Teilreifen erzielt, der einfach und unkompliziert durch den anschließenden Verfahrensschritt B komplettiert werden kann. Das läßt eine Einflußnahme auf die erzielbare Gleichförmigkeit (Tyre-Uniformity) zu. Der im wesentlichen ausvulkanisierte Teilreifen ist über einen längeren Zeitraum lagerbar, so daß die Entscheidung, in welcher Weise der Reifen komplettiert werden soll, z.B. bezüglich der Laufstreifenmischung oder des Laufstreifenprofils, auf einen späteren Zeitpunkt verschoben werden kann. Der Reifenhersteller wird somit in die Lage versetzt, den Marktanforderungen entsprechend und prompt zu reagieren.

Insbesondere dann, wenn als radial äußerste Lage im Verfahrensschritt A eine Laufstreifenunterplatte und/oder eine Laufstreifenbasislage aufgebracht wird, bietet der Verfahrensschritt B den Vorteil einer unkomplizierten und raschen Fertigstellung und damit eine schnelle Reaktion bzw. ein Zuschnitt auf sich ändernde Profilwünsche und Anpassungen. Durch eine im wesentlichen Ausvulkanisation des Teilreifens ohne Profillaufstreifen liegt die Laufstreifenunterplatte bzw. die Laufstreifenbasislage (Base) bei der Vulkanisation an der glatten Innenwand der Heizform an, so daß durch den Innendruck in der Form keine Verschiebungen in der Gewebestruktur des Gürtelverbandes hervorgerufen werden können, wie dies aus der gemeinsamen Vulkanisation von Gürtellagen und Laufstreifen, d.h. also im einstufigen Verfahren, bei dem Profilklötze durch Innendruck in die Form gepreßt werden müssen, gelegentlich beobachtet wird. Sollten bei der Herstellung des Teilreifens doch einmal Reifenungleichförmigkeiten auftreten, so können diese vor der Durchführung des Verfahrensschrittes B beseitigt werden, indem beispielsweise ein Abschleifen der Außenoberfläche des Teilreifens vorgesehen wird.

Erfindungsgemäß wird die Oberfläche des im wesentlichen ausvulkanisierten Teilreifens und/oder die Oberfläche des gesamten oder wenn bereits im Verfahrensschritt A ein Teil des Laufstreifens (Laufstreifenunterplatte, Laufstreifenbasislage) aufgebracht wurde, die Oberfläche der restlichen Teile des vorzugsweise unvulkanisierten Laufstreifens (z.B. Laufstreifenoberlage-Cap) plasma- und/oder flammenbehandelt, so daß die im Verfahrensschritt B aufgebrachten Bestandteile mit der behandelten Oberfläche mit dem Teilreifen in Kontakt gebracht werden. Dadurch wird die Konfektionsklebrigkeit erhöht, wodurch auf zusätzliche Haftvermittler bzw. Anrauhen der Oberfläche des vor- bzw. ausvulkanisierten Teilreifens verzichtet werden kann. Durch diese sehr einfach durchzuführende Behandlungsmethode wird es möglich, qualitätsgerecht und umweltfreundlich einen Fahrzeugluftreifen herzustellen, da der Laufstreifen bzw. Teile des Laufstreifens in einer definierten Lage aufgebracht werden, so daß auch nach der Fertigstellung (Fertigvulkanisation des Komplettreifens) ein Fahrzeugreifen erzielt wird, der aufgrund der exakten Lage der einzelnen Schichten verbesserte Laufeigenschaften aufweist.

Die Verfahrensschritte A und B können auch in der Art aufgeteilt sein, daß der Teilreifen im Verfahrensschritt A durch Konfektionierung einer luftundurchlässigen Innenschicht einer Festigkeitsträger enthaltenen Karkasse, gegebenenfalls Wulstkerne und gegebenenfalls den Wulstbereich verstärkende Kautschukschichten und zumindest einer Gürtellage konfektioniert wird und nach der Ausvulkanisation dieses Teilreifens im Verfahrensschritt B der Teilreifen durch Hinzufügen der insbesondere unvulkanisierten ein- oder mehrteiligen Bandage und des Laufstreifens zu einem Komplettreifen aufgebaut wird. Die radial äußere Oberfläche des im wesentlichen ausvulkanisierten Teilreifens, der im Verfahrensschritt A hergestellt wurde und/oder die Oberfläche der insbesondere unvulkanisierten Bandagenlage und/oder des gesamten Laufstreifens, die mit dem Teilreifen in Kontakt gebracht wird, wird zumindest teilweise plasma- und/oder flammenbehandelt.

Die Aufbringung einer ein- oder mehrteiligen Bandage, die aus in Kautschuk gebettete i.a. textile Festigkeitsträger, z.B. Nylon, besteht und des Laufstreifens im Verfahrensschritt B hat den Vorteil, daß im fertigen Reifen in der Bandage eine gleichmäßige Längsspannungsverteilung über die Reifenbreite erzielt wird. Wird nun die Reifenkontur durch spannungsunterschiedliches Aufbringen beeinflußt, indem dem Teilreifen eine Kontur vermittelt wird, die von der im Verfahrensschritt B vermittelten Kontur abweicht, lassen sich gezielt bestimmte Reifeneigenschaften, wie etwa Abrieb oder Hochgeschwindigkeitstauglichkeit optimieren. Im Verfahrensschritt B kann die Oberfläche des im wesentlichen ausvulkanisierten Teilreifens plasma- und/oder flammenbehandelt sein, so daß eine exakte Auflage der ein- oder mehrteiligen insbesondere unvulkanisierten Bandage ermöglicht wird. Gleichzeitig ist es möglich, daß die Unterseite und/oder die Oberseite der insbesondere unvulkanisierten Bandagenlage plasma- und/oder flammenbehandelt wird, so daß eine gute Klebrigkeit einerseits zum ausvulkanisierten Teilreifen und andererseits zum z. B. unvulkanisierten Laufstreifen erzielt wird. Es ist aber auch z. B. möglich, daß die Oberfläche der ein- oder mehrteiligen unvulkanisierten Bandage, die mit einem unvulkanisierten Laufstreifen in Kontakt tritt, nicht flammen- und/oder plasmabehandelt wird, da die Konfektionsklebrigkeit zwischen zwei unvulkanisierten Kautschukmischungsschichten bereits ausreichend sein kann, wodurch auch eine Behandlung der Unterseite des unvulkanisierten Laufstreifens ggf. unterbleiben kann. Des weiteren ist es möglich, die Bandage in Verbindung mit dem Laufstreifen als ein gesamtes Bauteil aufzubringen, wobei die Oberfläche des im wesentlichen ausvulkanisierten Teilreifens und/oder die Oberfläche der Bandage, die in unmittelbarem Kontakt mit der Oberfläche des Teilreifens tritt, plasma- und/oder flammenbehandelt sein kann.

Besonders bevorzugt ist, wenn zumindest der Teil der Oberfläche des im wesentlichen ausvulkanisierten Teilreifens plasma- und/oder flammenbehandelt wird, auf dem zumindest ein Endbereich einer im Verfahrensschritt B aufgebrachten Schicht zum Liegen kommt. Da die Bandagenlage und/oder der gesamte Laufstreifen bzw. Teile des Laufstreifens vorzugsweise in endlichen Bahnen um den Teilreifen gewickelt werden, ist es vorteilhaft, wenn zur Fixierung der einzelnen Bahnenendbereiche die Oberfläche des ausvulkanisierten Teilreifens an diesen Stellen plasma- und/oder flammenbehandelt ist. Praktisch ist es in der Art möglich, daß sich in unmittelbarer Nähe der für den Verfahrensschritt B erforderlichen Konfektionierung an der Trommel eine Plasma- und/oder Flammenbehandlungsvorrichtung, die z.B. schwenkbar gelagert ist, befindet. So kann vorteilhafterweise über die gesamte Axialerstreckung des Teilreifens in einer Breite von z.B. 1 - 5 cm die Behandlung erfolgen und anschließend der Endbereich der aufzubringenden Schicht in diesem behandelten Bereich aufgelegt werden. Aufgrund mangelnder Konfektionsklebrigkeit in diesem Bereich bestand bisher das Problem, daß ein Aufreißen dieser Enden der endlichen Schichten eine qualitätsgesicherte Herstellung von Fahrzeugluftreifen beeinträchtigt hat. Auch ist es alternativ oder zusätzlich möglich, daß der Teil der Oberfläche zumindest eines Endbereiches und/oder Stoßstelle der im Verfahrensschritt B aufgebrachten endlichen Schicht plasma- und/oder flammenbehandelt wird, da bei einer Überlappung oder Stoßlegung mit der Oberfläche des anderen Endbereiches oder Stoßstelle diese ebenfalls in Kontakt gebracht werden. Durch diese Behandlung, die in gleicher Weise (schwenkbar gelagerte Behandlungsvorrichtung) wie am Teilreifen vorgenommen werden kann, wird zusätzlich eine qualitätsgerechte Herstellung eines Fahrzeugluftreifens sichergestellt.

Wiederum bevorzugt ist, wenn im Verfahrensschritt B der gesamte bzw. Teile des unvulkanisierten Laufstreifens mittels eines Injection-Molding-Verfahrens aufgebracht wird, da dadurch eine besondere Gleichförmigkeit der Dichte und Struktur des Laufstreifens erreicht wird. Außerdem kann während des Austrittes der Kautschukmischungsschicht aus dem Extruder diese sofort z.B. mit einer Niederfrequenzfunkenentladungsvorrichtung mit Korona behandelt werden.

Es ist aber auch möglich, daß der Verfahrensschritt B so gestaltet wird, daß auf den Teilreifen vor- bzw. ausvulkanisierte Schichten aufgebracht werden können. So ist es denkbar, die Unterseite z. B. eines bereits vor- bzw. ausvulkanisierten Laufstreifenringes plasma- und/oder flammenzubehandeln. Durch die Aufbringung eines ausvulkanisierten Laufstreifenringes kann der Herstellungsprozeß des Komplettreifens noch schneller den Markterfordernissen angepaßt werden.

Weiterhin ist es möglich, daß im Verfahrensschritt B auf die Seitenwände des im wesentlichen ausvulkanisierten Teilreifens Etiketten (Abdeckstreifen), die farbig gestaltet sein können, aufgelegt werden. Diese Etiketten können vorzugsweise aus unvulkanisierter Kautschukmischung, wiederum bevorzugt aus der Kautschukmischung der Seitenwände, gefertigt sein. Eine oder beide Kontaktfläche(n) zwischen Teilreifen und Etikett können plasma- und/oder flammenbehandelt werden. Durch die Plasma- und/oder Flammenbehandlung wird sichergestellt, daß insbesondere kleine Etiketten an einer definierten Stelle angebracht werden können, wo sie sich nach der Vulkanisation (Fertigstellung des Komplettreifens) auch noch befinden. Da auf zusätzliche Einstreichvorgänge, z. B. mit Benzinlösung verzichtet werden kann, können nun auch farbige Etiketten ohne durch dunkle Benzinlösung verschmutzt zu werden, sicher auf die darunter befindliche Seitenwand aufgebracht werden. Nach der Fertigstellung des Komplettreifens ist es auch möglich die Etiketten weiter z. B. durch Laser zu beschriften.

Weitere Ausgestaltungsmöglichkeiten der Verfahrensschritte A und B und deren Vorteile sind der DE 195 07 486 A1 entnehmbar.

Anhand eines Ausführungsbeispiels soll die Erfindung näher erläutert werden. Die folgenden Figuren zeigen schematisch:
- Figur 1:: Prinzip einer Plasmabehandlung
- Figur 2:: Schrägansicht auf einen Abschnitt einer Hälfte eines fertig vulkanisierten Teilreifens, teilweise aufgeschnitten
- Figur 3:: einen Querschnitt durch einen Reifen während Verfahrensschritt B.

Mittels einer Niederfrequenzkoronabehandlungsanlage der Firma ARCOJET Oberflächentechnik GmbH, nämlich der ARCOJET PG 051, die Halbleitergenerator mit integriertem Transformator zur Hochspannungserzeugung sowie einen Elektrodenkopf zur Funkenentladung aufweist, kann das erfindungsgemäße Verfahren durchgeführt werden. Die Elektroden befinden sich in einem Tefloneinsatz eines Metallgehäuses, das mit dem Generator über einen flexiblen Schlauch für die Gebläseluft und einen flexiblem Schlauch für die hochspannungsführenden Kabel fest verbunden ist.

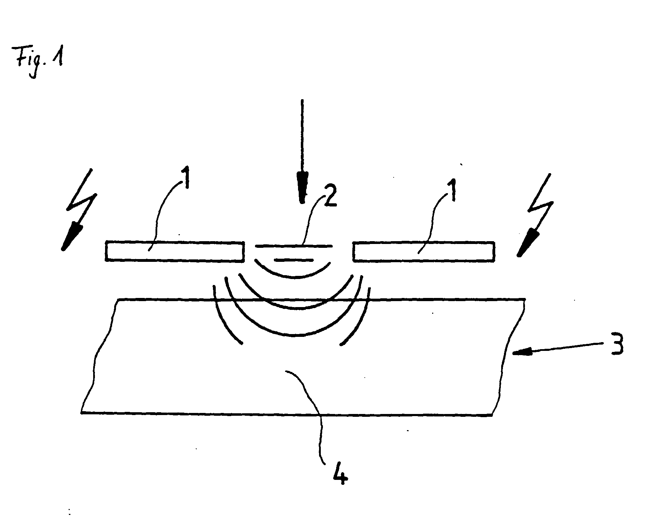

Die Anwendung dieser Vorrichtung wird schematisch in der Figur 1 dargestellt. Der Elektrodenkopf, der die beiden Elektroden 1 aufweist, wird in einem Abstand von 4-15 mm an die zu behandelnde Elastomerschicht 3, z. B. radial äußerste Lage (Bandage) des ausvulkanisierten Teilreifens, herangeführt, so daß auf die Oberfläche 4 der Bandagenlage 3, die während der Zündung der Elektroden 1 entladenen Gasteilchen (Luftteilchen 2) einwirken können. Die durch den Pfeil dargestellte Luftströmung bewirkt, daß die entladenen Teilchen aus dem Zwischenraum der Elektroden herausgetragen werden und auf die Kautschukoberfläche 4 auftreffen können. Die Behandlungszeit beträgt ca. 0,17-0,3 sec. Die so behandelte Oberfläche, z. B. des ausvulkanisierten Teilreifens, ist in der Lage, vorzugsweise mit einer unbehandelten, unvulkanisierten oder einer behandelten, unvulkanisierten Kautschukmischungsschicht eine gute Adhäsion einzugehen. Für die angegebene Anlage (ARCOJET PG 051) sollte die Summe der Behandlungszeiten beider Oberflächen ca. <0,6 sec. sein. Dieser Bereich ist vorteilhaft, da einerseits die Konfektionsklebrigkeit ausreichend erhöht wird und gleichzeitig auch die Haltbarkeit im fertigen Komplettreifen optimal gegeben ist.

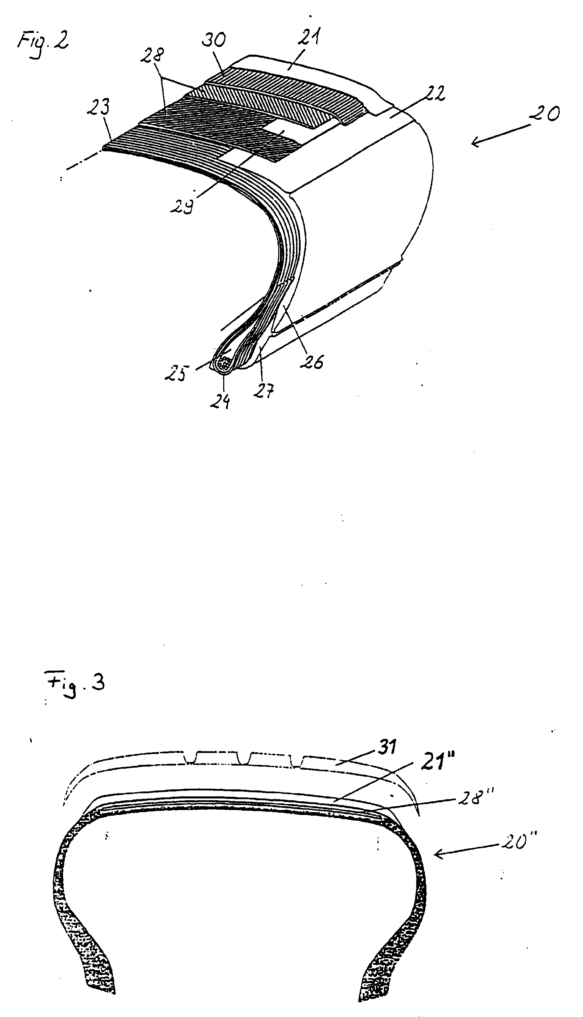

Der in Figur 2 dargestellte Teilreifen 20 umfaßt als Bauteile eine Laufstreifenunterplatte 21, Schulterstreifen 22, eine Karkassenlage 23, Wulstkerne 24, Apexteile 25, Seitenwände 26, Hornprofile 27, einen zweilagigen Gürtel 28, wobei zwischen den Gürtellagen ein weiterer Gummistreifen 29 (Gürtelpuffer) angeordnet ist, eine Bandage 30 sowie eine Innenseele 19. Der Teilreifen 20 wird auf herkömmliche Art und Weise konfektioniert mit dem Unterschied, daß kein Laufstreifen und zusätzlich die Laufstreifenunterplatte 21 aufgebracht wird. Der Teitreifen 20 wird anschließend an einer die erwünschte Querschnittskontur vermittelnden Vulkanisationsform vulkanisiert. Nach der Vulkanisation wird die äußerste Lage (Laufstreifenunterplatte 21) des ausvulkanisierten Teilreifens einer Koronabehandlung, wie in Figur 1 beschrieben, unterzogen. Über den rotierbar gelagerten Teilreifen 20 ist die Behandlungsvorrichtung angebracht, so daß die auftreffenden Teilchen 2 die Oberfläche der Laufstreifenunterplatte 21 modifizieren.

In der Figur 3 ist dargestellt, daß der fertig vulkanisierte Teilreifen 20'' mit der modifizierten Oberfläche der Laufstreifenunterplatte 21'' durch einen unvulkanisierten Laufstreifen 31 komplettiert wird. Dieser Laufstreifen 31 kann aus einer Laufstreifenbasislage (Base) und einem Laufstreifenoberteil (Cap) bestehen oder auch einteilig (ohne Cap und Base-Aufbau) ausgebildet sein. Im Überlappungsbereich der beiden Enden des bahnförmigen Laufstreifens 31 wird ebenfalls zur Erhöhung der Konfektionsklebrigkeit und damit auch zur Haftung im vulkanisierten Zustand dieser mit einem Plasma behandelt, so daß die Kontaktflächen im Überlappungsbereich des Laufstreifens 31 modifiziert sind. Der Verfahrensachritt B wird durch Vulkanisieren in einer Vulkanisationsform abgeschlossen.

Das erfindungsgemäße Verfahren ermöglicht eine unkomplizierte, umweltfreundliche qualitätsgerechte Herstellung von Fahrzeugluftreifen. Mit diesem Verfahren kann auf sich schnell ändernde Markterfordernisse eingegangen werden, ohne große Produktionsumstellungen vornehmen zu müssen. Durch die Erhöhung der Konfektionsklebrigkeit durch die Plasma- und/oder Flammenbehandlung der einzelnen Bauteile wird diese qualitätsgerechte Herstellung gewährleistet.

## Patentansprüche

1. Verfahren zur Herstellung eines Fahrzeugluftreifens, mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und gegebenenfalls zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei im Verfahrensschritt A ein Teilreifen aufgebaut wird, der radial außen eine Gürtelverstärkung aufweist, die eine Bandage umfassen kann und dieser Teilreifen anschließend im wesentlichen ausvulkanisiert wird, und im Verfahrensschritt B der Teilreifen durch Hinzufügen des gesamten oder der restlichen Teile des insbesondere unvulkanisierten Laufstreifens zu einem Komplettreifen aufgebaut wird, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt gebracht wird, zumindest teilweise plasmabehandelt wird.

2. Verfahren zur Herstellung eines Fahrzeugluftreifens, mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und gegebenenfalls zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei im Verfahrensschritt A ein Teilreifen aufgebaut wird, der radial außen eine Gürtelverstärkung aufweist, die eine Bandage (30) umfassen kann und dieser Teilreifen anschließend im wesentlichen ausvulkanisiert wird, und im Verfahrensschritt B der Teilreifen durch Hinzufügen des gesamten oder der restlichen Teile des insbesondere unvulkanisierten Laufstreifens zu einem Komplettreifen aufgebaut wird, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt gebracht wird, zumindest teilweise flammenbehandelt wird.

3. Verfahren zur Herstellung eines Fahrzeugluftreifens, mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei im Verfahrensschritt A ein Teilreifen aufgebaut wird, der radial außen eine Gürtelverstärkung aufweist und dieser Teilreifen anschließend im wesentlichen ausvulkanisiert wird, und im Verfahrensschritt B der Teilreifen durch Hinzufügen der insbesondere unvulkanisierten Bandage und des insbesondere unvulkanisierten Laufstreifens zu einem Komplettreifen aufgebaut wird, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche der insbesondere unvulkanisierten Bandage, die vor dem Vulkanisieren mit dem im wesentlichen ausvulkanisierten Teilreifen in Kontakt gebracht wird, und gegebenenfalls die Oberfläche des gesamten insbesondere unvulkanisierten Laufstreifens zumindest teilweise plasmabehandelt werden.

4. Verfahren zur Herstellung eines Fahrzeugluftreifens, mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei im Verfahrensschritt A ein Teilreifen aufgebaut wird, der radial außen eine Gürtelverstärkung aufweist und dieser Teilreifen anschließend im wesentlichen ausvulkanisiert wird, und im Verfahrensschritt B der Teilreifen durch Hinzufügen der insbesondere unvulkanisierten Bandage und des insbesondere unvulkanisierten Laufstreifens zu einem Komplettreifen aufgebaut wird, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche der insbesondere unvulkanisierten Bandage, die vor dem Vulkanisieren mit dem im wesentlichen ausvulkanisierten Teilreifen in Kontakt gebracht wird, und gegebenenfalls die Oberfläche des gesamten insbesondere unvulkanisierten Laufstreifens zumindest teilweise flammenbehandelt werden.

5. Verfahren nach zumindest einem der vorhergehenden Ansprüche, dadurch gekennzeichnet, daß zumindest der Teil der Oberfläche des ausvulkanisierten Teilreifens plasma- und/oder flammenbehandelt wird, auf dem zumindest ein Endbereich einer im Verfahrensschritt B aufgebrachten Schicht zum Liegen kommt.

6. Verfahren nach zumindest einem der vorhergehenden Ansprüche, dadurch gekennzeichnet, daß der Teil der Oberfläche zumindest eines Endbereiches und/oder Stoßstelle der im Verfahrensschritt B aufgebrachten Schicht plasma- und/oder flammenbehandelt wird, der bei einer Überlappung oder auf Stoßlegung mit der Oberfläche des anderen Endbereiches oder Stoßstelle in Kontakt gebracht wird.

7. Verfahren nach zumindest einem der vorhergehenden Ansprüche, dadurch gekennzeichnet, daß als Plasmabehandlung die Koronaentladung eingesetzt wird.

8. Verfahren nach zumindest einem der vorhergehenden Ansprüche, dadurch gekennzeichnet, daß der unvulkanisierte Laufstreifen mittels Injection - Moulding aufgebracht wird.

9. Verfahren nach zumindest einem der vorhergehenden Ansprüche, dadurch gekennzeichnet, daß der Laufstreifen als im wesentlichen ausvulkanisierter Laufstreifenring auf den Teilreifen aufgebracht wird.

10. Verfahren nach zumindest einem der vorhergehenden Ansprüche, dadurch gekennzeichnet, daß im Verfahrensschritt B ein Etikett auf zumindest eine Seitenwand des Teilreifens aufgelegt wird.

11. Fahrzeugluftreifen mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und gegebenenfalls zumindest einer über der Gürtellage befindlichen ein- oder mehrteiligen Bandage (30), Seitenwänden (26) sowie gegebenenfalls weiteren üblichen Bestandteilen, der durch zumindest zwei voneinander getrennte Verfahrensschritte A und B hergestellt worden ist, wobei am Ende des Verfahrensschrittes A ein Teilreifen vorliegt, der radial außen eine Gürtelverstärkung aufweist, die eine Bandage umfassen kann und dieser Teilreifen nach seiner im wesentlichen Ausvulkanisation im Verfahrensschritt B durch Hinzufügen des gesamten oder der restlichen Teile des insbesondere unvulkanisierten Laufstreifens einen Komplettreifen bildet, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche des gesamten oder der restlichen Teile des insbesondere unvulkanisierten Laufstreifens, die vor dem Vulkanisieren mit dem im wesentlichen ausvulkanisierten Teilreifen in Kontakt stehen, zumindest teilweise plasma- und/oder flammenbehandelt ist.

12. Fahrzeugluftreifen mit einer radial innenliegenden luftundurchlässigen Schicht (19), einer Karkasse (23), die um die gegebenenfalls angeordneten Wulstkerne (24) geschlagen ist, einem radial außen befindlichen Laufstreifen, zumindest einer zwischen Karkasse (23) und Laufstreifen angeordneten Gürtellage (28) und zumindest einer über der Gürtellage befindlichen ein- oder mehrteiligen Bandage (30), Seitenwänden (26) sowie gegebenenfalls weiteren üblichen Bestandteilen, durch zumindest zwei voneinander getrennte Verfahrensschritte A und B, wobei am Ende des Verfahrensschrittes A ein Teilreifen vorliegt, der radial außen eine Gürtelverstärkung aufweist und dieser Teilreifen nach seiner im wesentlichen Ausvulkanisation im Verfahrensschritt B durch Hinzufügen der insbesondere unvulkanisierten Bandage und des insbesondere unvulkanisierten Laufstreifens einen Komplettreifen bildet, der dann ebenfalls einem Vulkanisationsprozeß unterzogen wird,
**dadurch gekennzeichnet,**
daß die radial äußere Oberfläche des im wesentlichen ausvulkanisierten Teilreifens und/oder die Oberfläche der insbesondere unvulkanisierten Bandage, die vor dem Vulkanisieren mit dem im wesentlichen ausvulkanisierten Teilreifen in Kontakt gebracht wird, und gebenenfalls die Oberfläche des gesamten insbesondere unvulkanisierten Laufstreifens zumindest teilweise plasma- und/oder flammenbehandelt ist.
